# EUROPEAN PATENT APPLICATION

(11) **EP 1 820 676 A1**
(43) Date of publication of application: **22.08.2007**
(21) Application number: 06425100.2
(22) Date of filing: 17.02.2006
(51) Int. Cl.: B60H 1/00

(54) **Modular heat exchange assembly for vehicles and modular system for producing diferent models of heat exchange assemblies**

(71) Applicant: DENSO THERMAL SYSTEMS S.p.A., 10046 Poirino (Torino) (IT)
(72) Inventor: Ferrarese Claudio c/o Denso Thermal Systems Spa, i-10046 Poirino(Torino) (IT)
(74) Representative: Marchitelli, Mauro

(57) **Abstract**

Air distribution assembly for vehicles, comprising:
- a central body (12) provided with air mixing and distributing means (14, 16),
- a substantially tank shaped lower closure body (24', 24", 24'") fastened on an open lower side of the central body (12),
- a ventilation unit (20', 20", 20'") comprising a support case (26', 26", 26'"), an electric motor and at least one centrifugal fan, and
- a conduit (22', 22", 22'") for distributing air towards the front windshield of the vehicle,

The lower closure body (24', 24", 24'"), the ventilation unit (20', 20", 20'") and the lower closure body (24', 24", 24'") are configured as autonomous modular units, interchangeable with other modular units of the same category, the different modular units being all operatively connectable to the same central body (12).

## Description

The present invention relates to a modular heat exchange assembly for vehicles and a modular system for producing different models of heat exchange assemblies.

The current tendency of automotive manufacturers is to use heat exchange assemblies provided with standard components for different vehicle models, in order to reduce costs thanks to economies of scale. While use of a single heat exchange assembly for variants of a same vehicle model is fairly normal, the current requirement by automotive manufacturers is to provide heat exchange assemblies that can be mounted on vehicle types that are radically different from each other, e.g. on a compact car, a mid-class vehicle, a minivan, etc.

The object of the present invention is to provide a modular heat exchange assembly that enables to meet the aforesaid need.

According to the present invention, said object is achieved by a heat exchange assembly and by a modular system having the characteristics set out in the claims.

The present invention shall now be described in detail with reference to the accompanying drawings, provided purely by way of non limiting example, in which:
- Figures 1, 2 and 3 are schematic views of three different heat exchange assemblies obtained with the modular system according to the present invention,
- Figures 4, 5 and 6 are exploded perspective views illustrating modular components which constitute a heat exchange assembly according to the invention.

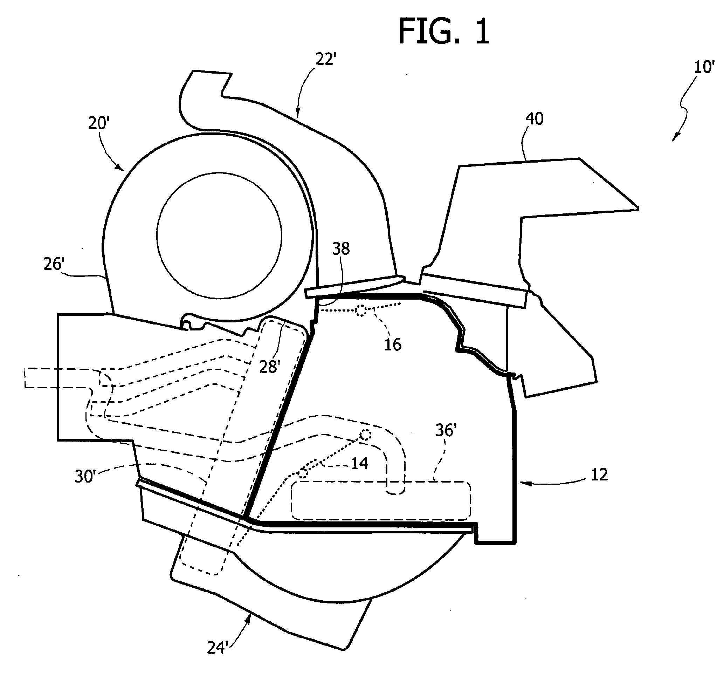

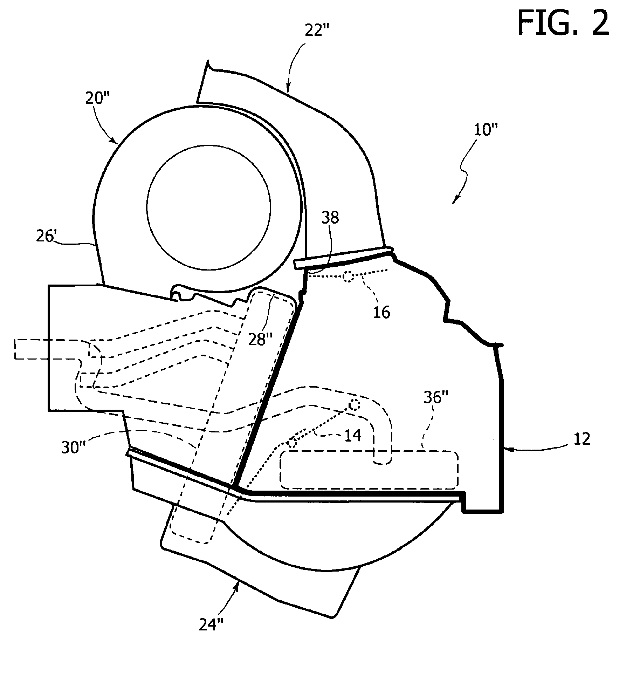

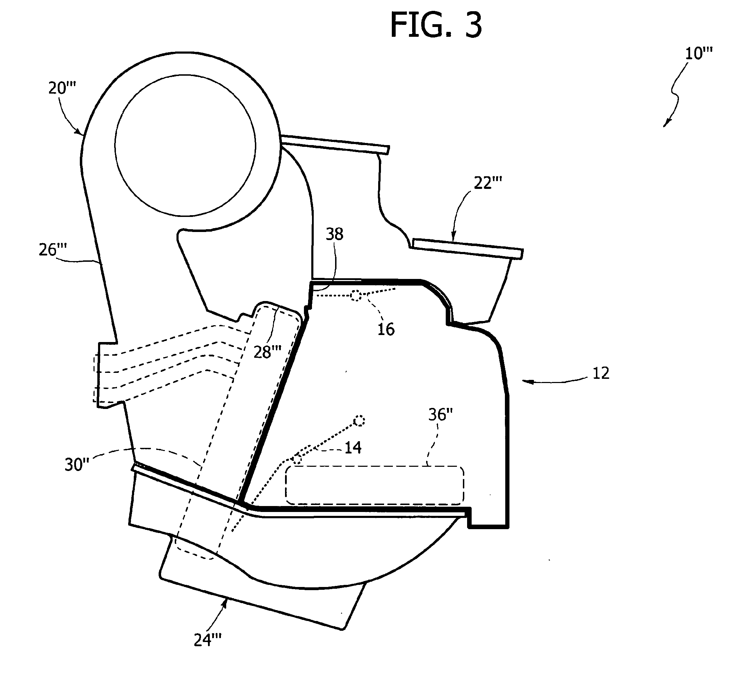

With reference to Figures 1, 2 and 3, the numbers 10', 10" and 10"' designate three different heat exchange assemblies able to be mounted on three vehicles having radically different characteristics.

The three heat exchange assemblies 10', 10" and 10"' have in common a central body 12 that serves the function of mixing and distributing air. The central body 12 is provided with movable mixing blades 14 to regulate the temperature of the air flow and with movable distribution blades to distribute the air flow towards different outlets, e.g. towards the base of the vehicle windshield (defrost), towards the feet of the occupants of the front seats of the vehicle, towards front and/or lateral distribution outlets provided in the vehicle dashboard, etc. The air mixing and distributing means 14, 16 are not described in detail as they are well known to any person skilled in the art. For the purposes of the present invention, it is important to note that the mixing and distributing means 14, 16 remain identical for the different heat exchange assemblies 10', 10" and 10"'.

The central body 11 has an outer case 18 made of injection moulded plastic material which remains unchanged for the different modular heat exchange assemblies 10', 10" and 10"'. The case 18 of the central body 12 is provided with interface sections whereto can be fastened different modular units to form the complete heat exchange assembly.

According to the present invention, to obtain a complete heat exchange assembly 10', 10" and 10"' able to equip three vehicle models differing radically from each other, three main modular components, operatively connectable to the same central body 12, have been identified: a ventilation unit 20', 20", 20"', a conduit 22', 22", 22"' for distributing air towards the front windshield of the vehicle, and a lower closure body 24', 24", 24"'.

The three main modular components 20', 20", 20"', 22', 22", 22"' and 24', 24", 24"', are all operatively connectable to the same central body 12. The operative connection consists of the fact that the functional elements of the heat exchange assembly 10', 10" and 10"' are in the condition to perform their function no matter what modular unit is mounted on the central body 12.

With reference to Figures 1 through 4, each of the modular ventilation units 20', 20", and 20"' comprises a support case 26', 26" and 26"' in which is housed an electric motor and at least one centrifugal fan. The support case 26', 26" and 26"' defines at least one air inlet and an outlet conduit for the airflow downstream of the centrifugal fan.

The case 26', 26", 26"' of each ventilation unit 20' , 20", 20"' has a seat 28', 28", 28"' for housing an evaporator 30', 30". In the illustrated example, only two different types of evaporator 30', 30" are provided for the three different heat exchange assemblies 10', 10", 10"', so the first ventilation unit 20' uses a first type of evaporator 30', whilst the ventilation units 20" and 20"' both use the same type of evaporator 30". The evaporator 30', 30" constitutes an integral part of the ventilation units 20', 20" and 20"' and it is mounted in the respective seat 28', 28", 28"' at the bottom of the air flow outlet conduit from the ventilation unit 20', 20", 20"'.

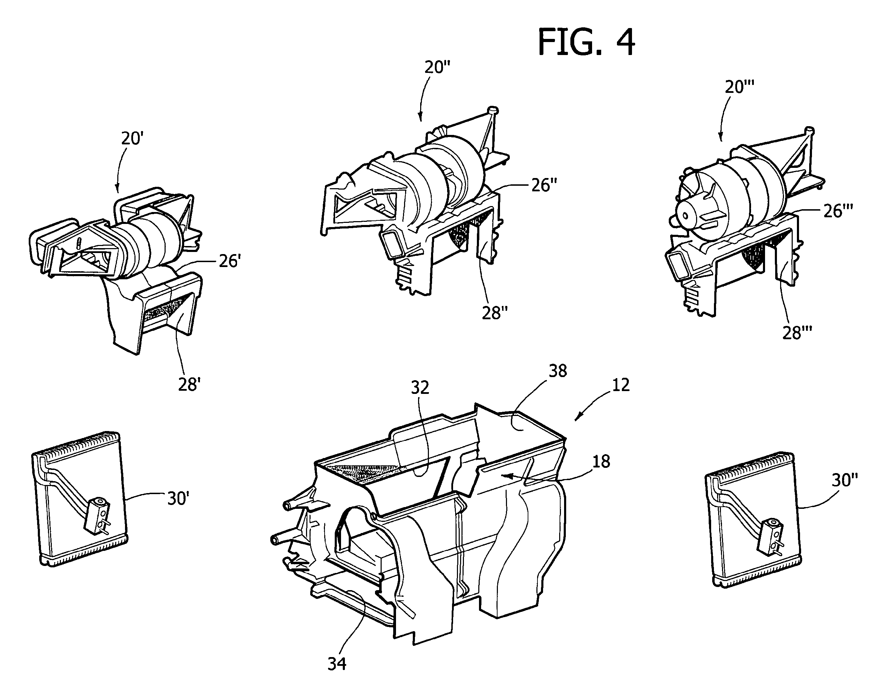

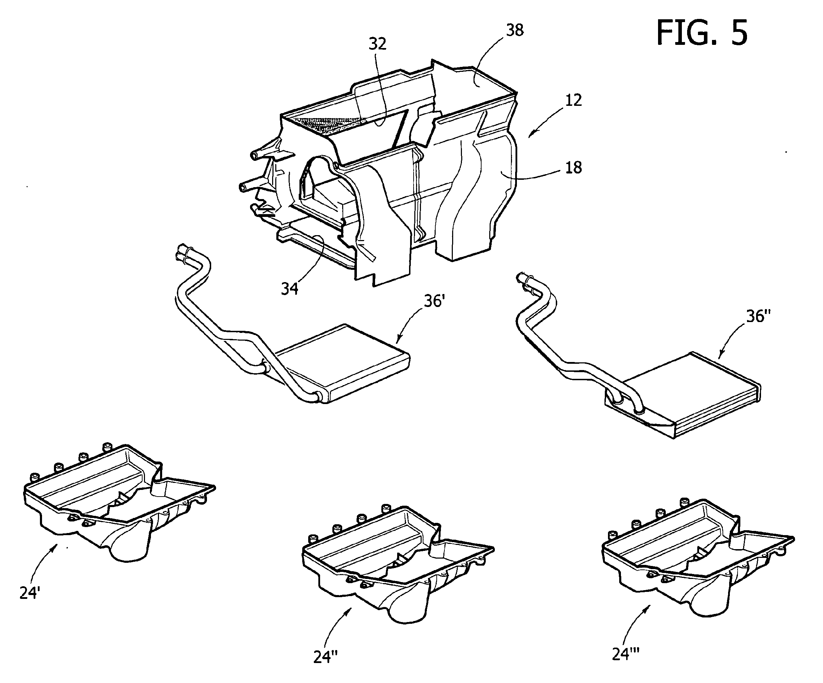

As shown in Figures 1 through 3, when the ventilation unit 20', 20", 20"' is mounted on the central body 12, the evaporator 30', 30" faces an opening 32 (Figures 4, 5 and 6) of the central body 12 which places in communication the outlet channel of the ventilation unit 20', 20", 20"' with the inner volume of the central body 12.

With reference to Figures 1, 2, 3 and 5, the central body 12 is provided with a lower opening 34 whereat is mounted a heating radiator 36', 36". The lower closure body 24', 24", 24"' is substantially tank shaped and it is fastened to the lower part of the central body 12, underneath the opening 34. The lower closure body 24', 24", 24"' receives the lower part of the evaporator 30', 30" and defines a conduit for the passage of the air flow to be heated. The flow of air flowing out of the ventilation unit 20', 20", 20"', depending on the position of the mixing means 14, can pass only through the evaporator 30, can traverse in succession the evaporator 30 and the heating radiator 36', 36" or it can be divided in two flows which are mixed together downstream of the radiator and of the evaporator.

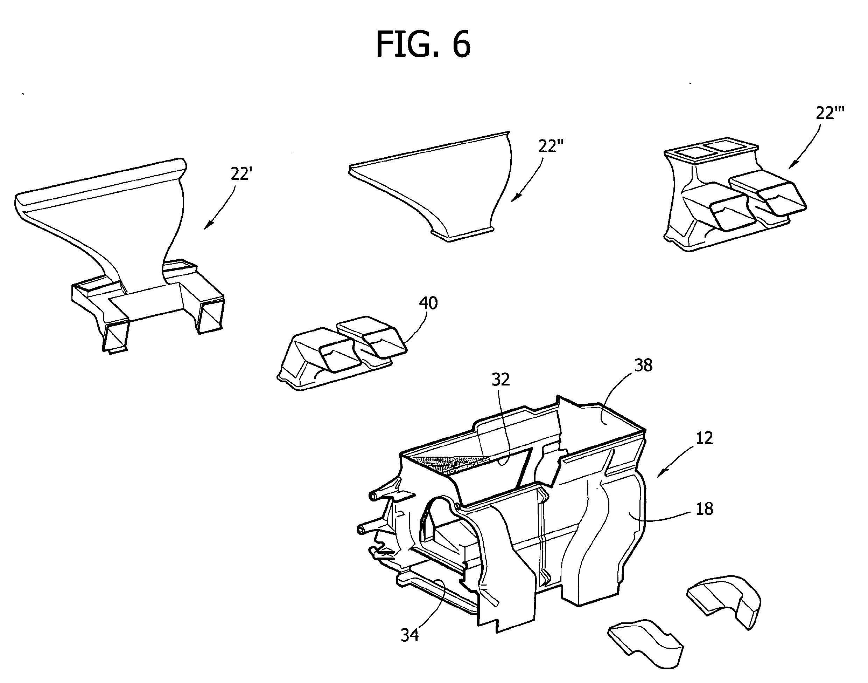

With reference to Figures 1, 2, 3 and 6, the third modular component necessary to complete the heat exchange assembly is constituted by the conduit for the distribution of the air flow to the base of the front windshield of the vehicle. A plurality of different types of air distribution conduits 22', 22", 22"' are provided, fastened at an upper opening 38 of the central body 12. The air distribution conduits 22', 22", 22"' were represented in purely schematic fashion in the figures. Each conduit can also serve to deliver a flow of air distributed along an extended surface of the dashboard or to convey the flow towards front outlets designated by the number 40 in Figures 1 and 6.

## Claims

1. Air distribution assembly for vehicles, comprising:
- a central body (12) provided with air mixing and distributing means (14, 16),
- a substantially tank shaped lower closure body (24', 24", 24"') fastened on an open lower side of the central body (12),
- a ventilation unit (20', 20", 20"') comprising a support case (26', 26", 26"'), an electric motor and at least one centrifugal fan, and
- a conduit (22', 22", 22"') for distributing air towards the front windshield of the vehicle,
**characterised in that** the lower closure body (24', 24", 24"'), the ventilation unit (20', 20", 20"') and the lower closure body (24', 24", 24"') are configured as autonomous modular units, interchangeable with other modular units of the same category, the different modular units being all operatively connectable to the same central body (12).

2. Heat exchange assembly as claimed in claim 1, **characterised in that** the ventilation unit (20', 20", 20"') is provided with a seat (28', 28", 28"') in which is mounted an evaporator (30', 30") positioned in such a way that when the ventilation unit (20', 20", 20"') is mounted on the central body (12) the evaporator (30', 30") faces an opening (32) of the central body (12) which places in communication the inner volume of the central body 12 with an outlet conduit of the ventilation unit.

3. Heat exchange assembly as claimed in claim 1, **characterised in that** the central body (12) has a lower opening (34) whereat is mounted a heating radiator (36', 36").

4. Heat exchange assembly as claimed in claim 1, **characterised in that** the lower closure body (24', 24", 24"') receives a lower portion of the evaporator (30', 30") and forms a conduit for the flow of air directed towards the heating radiator (36', 36").

5. Heat exchange assembly as claimed in claim 1, **characterised in that** the conduit for distributing air towards the front windshield of the vehicle (22', 22", 22"') is fastened at an upper opening (38) of the central body (12).

6. Modular system for producing different models of heat exchange assemblies (10', 10", 10"') for vehicles, **characterised in that** it comprises:
- a single type of central body (12) provided with an outer case (18) and with air mixing and distributing means (14, 16),
- a plurality of types of ventilation unit (20', 20", 20"') each provided with a support case (26', 26", 26"'), an electric motor and at least one centrifugal fan,
- a plurality of types of conduits (22', 22", 22"') for distributing air towards the front windshield of the vehicle, and
- a plurality of types of substantially tank shaped lower closure bodies (24', 24", 24"'),
- wherein the plurality of types of ventilation units (20', 20", 20"') air distribution conduits (22', 22", 22"') and lower closure bodies (24', 24", 24"') are all operatively connectable to the single type of central body (12).
